(19) **Europäisches Patentamt**

**European Patent Office**

**Office européen des brevets**

(11) Veröffentlichungsnummer: **0 156 032**
**B1**

(12) **EUROPÄISCHE PATENTSCHRIFT**

(45) Veröffentlichungstag der Patentschrift:
28.10.87

(51) Int. Cl.⁴: **H 02 K 55/04**

(21) Anmeldenummer: **84116147.4**

(22) Anmeldetag: **21.12.84**

(54) **Einrichtung an einer rotierenden Maschine zur wärmebeweglichen und abdichtenden Kopplung zweier konzentrischer Wellen.**

(30) Priorität: **28.02.84 DE 3407275**

(43) Veröffentlichungstag der Anmeldung:
**02.10.85 Patentblatt 85/40**

(45) Bekanntmachung des Hinweises auf die Patenterteilung:
**28.10.87 Patentblatt 87/44**

(84) Benannte Vertragsstaaten:
**CH DE LI**

(56) Entgegenhaltungen:
**EP - A - 0 040 733**
**EP - A - 0 086 557**
**DE - A - 2 448 900**
**US - A - 3 991 588**

(73) Patentinhaber: **Siemens Aktiengesellschaft Berlin und München, Wittelsbacherplatz 2, D-8000 München 2 (DE)**

(72) Erfinder: **Weghaupt, Erich, Rathenaustrasse 10, D-4330 Mülheim/Ruhr (DE)**
Erfinder: **Intichar, Lutz. Dr. Dipl.-Ing., Max-Busch-Strasse 12, D-8520 Erlangen (DE)**
Erfinder: **Schnapper, Christoph. Dr. Dipl.-Phys., Lachnerstrasse 63, D-8520 Erlangen (DE)**

**Beschreibung**

Die Erfindung bezieht sich auf eine Einrichtung an einer rotierenden Maschine zur wärmebeweglichen und abdichtenden Kopplung zweier mit Ringspalt konzentrisch zueinander angeordneter, normalerweise synchron umlaufender Wellen, von denen zumindest die äussere Welle eine Hohlwelle ist, gemäss Oberbegriff des Anspruchs 1.

Insbesondere handelt es sich dabei um eine elektrische Maschine und bevorzugt um den Generatorläufer eines Turbogenerators mit supraleitender Erregerwicklung. Auf diesem bevorzugten Anwendungsgebiet ist eine gattungsgemässe Einrichtung durch die CH-PS 552 907 (1) und durch die DE-OS 2 918 763 (2), welch letztere der US-PS 4 323 801 (3) entspricht, bekannt. Bei diesen bekannten Einrichtungen nach (1) bis (3) ist nicht nur die äussere Welle, sondern auch die innere Welle als Hohlwelle ausgeführt. Der Spalt zwischen diesen beiden inneren und äusseren Hohlwellen, welche im normalen Betrieb synchron umlaufen, muss gegen Überdruck von aussen abgedichtet werden, weil der Spalt aus Gründen der thermischen Isolierung des im Inneren des inneren Hohlwellenteils zirkulierenden, auf einem Temperaturniveau nahe dem absoluten Nullpunkt befindlichen kryogenen Kühlmediums, insbesondere Helium, abgedichtet sein muss. Die hierzu erforderliche Wellendichtung mit ihrem Dehnungskompensator muss in der Lage sein, axiale Wellenverschiebungen im Zentimeterbereich und radiale und axiale Wellenschwingungen der beiden inneren und äusseren Wellenteile gegeneinander von max. 1 bis 2 Zehntel mm zu ermöglichen und ohne Beschädigung zu überstehen, ferner Torsionsschwingungen der beiden Wellenteile gegeneinander im zulässigen Verdrehwinkelbereich des Dehnungskompensators und gelegentlich kurzzeitig auftretende starke Verdrehungen der beiden Hohlwellenteile gegeneinander von mehreren Winkelgraden.

Bei hochtourigen Maschinen, deren Drehzahl $\geq$ 50 1/sek, sind Wellenschwingungen nicht zu vermeiden. Diese wirken sich ganz besonders auf die Abdichtung des Spaltes zweier konzentrisch angeordneter Hohlwellen aus. Wie erwähnt, besteht die besondere Problematik bei solchen Wellenanordnungen darin, einerseits eine Beweglichkeit der beiden koaxialen Wellenteile gegeneinander in axialer, radialer und tangentialer Richtung zu ermöglichen, andererseits für eine zuverlässige Abdichtung des Spaltes zwischen den beiden Wellenteilen mit einem Dehnungskompensator Sorge zu tragen, ohne dass dieser beschädigt wird. In radialer Richtung ist eine Schwingungsamplitude der Hohlwellen eines supraleitenden Generators im Betrieb relativ zueinander von max. 100 $\mu$m zu erwarten. Die Schwingungen in tangentialer Richtung erreichen bei Normalbetrieb etwa die gleiche Grösse. Beide Schwingungen wirken dauernd und müssen vom Dehnungskompensator aufgenommen werden. Ganz anders verhält es sich mit den axialen Relativverschiebungen der beiden Wellenteile und den grösseren relativen Winkelverdrehungen, die nur zeitweise bei bestimmten Betriebszuständen der Maschine, also relativ selten auftreten. Dabei kann der Dehnungskompensator bei entsprechender Dimensionierung sehr gut grosse axiale Wellenverschiebungen aufnehmen, zumal diese Bewegungen sehr langsam erfolgen. Der Dehnungskompensator ist aber nicht in der Lage, Verdrehbewegungen der beiden Hohlwellen gegeneinander von mehreren Zentimetern zu ertragen, da er gegen Verdrehung sehr steif ist. Auch eine Erhöhung der Kompensator-Wellenzahl würde nicht zum gewünschten Ergebnis führen, zumal es sich um sehr grosse Dehnungskompensatoren handelt, die einen Wellendurchmesser von $\geq$ 500 mm umschliessen. Ausserdem steht in axialer Richtung nur ein begrenzter Einbauraum zur Verfügung, so dass insgesamt auch durch grössere Länge des Dehnungskompensators die Torsionselastizität nicht mehr verbessert werden könnte.

In der DE-PS 3 019 864 (4) sind die erhöhten Anforderungen, die an eine Hochvakuumabdichtung des Ringspaltes bei einem supraleitenden Generatorläufer gestellt werden, wie folgt definiert:

a) Zwischen dem Warmzustand und dem Kaltzustand des Generatorläufers ergeben sich infolge thermischer Dilatation axiale Verschiebungen von beispielsweise 20 bis 25 mm, welche von der Hochvakuumabdichtung aufgenommen werden müssen.

b) Die Hochvakuumabdichtung muss im Normalbetrieb geringe Torsionsschwingungen zwischen dem Hohlzapfen und dem Lagerzapfen aufnehmen, wobei sich in Sonderbetriebsfällen durch Kurzschlussmomente auch im mm-Bereich liegende tangentiale Verdrehungen ergeben können.

c) Die Hochvakuumabdichtung muss hochfrequente Radialschwingungen zwischen dem Hohlzapfen und dem Lagerzapfen aufnehmen können, deren Amplitude im Normalbetrieb beispielsweise 10 bis 20 $\mu$m beträgt, wobei sich diese Amplitude beim Durchfahren von Resonanzlagen auch kurzfristig erhöhen kann.

d) Die Hochvakuumabdichtung muss auch zusätzlich hochfrequente radiale Beanspruchungen aufnehmen können, die sich durch Veränderungen in der Lagerausrichtung in horizontaler und/ oder vertikaler Richtung mit entsprechenden exzentrischen Lagen von Hohlzapfen und Lagerzapfen ergeben können.

e) Aufgrund des aus konstruktiven Gründen relativ grossen Durchmessers der Hochvakuumabdichtung von mindestens 500 bis 600 mm muss die Hochvakuumabdichtung so beschaffen sein, dass sie die relativ hohe Eigenfliehkraftbeanspruchungen aufnehmen kann.

f) Von der Hochvakuumabdichtung wird eine hohe Standzeit und eine grosse Wartungsfreundlichkeit verlangt, d.h., sie muss eine ununterbrochene Betriebszeit des Generators von mindestens 20 000 bis 25 000 Stunden gewährleisten und im Revisionsfall mit geringem Montageaufwand austauschbar sein.

In (4) wurde zur Lösung dieses Aufgabenkomplexes a) bis f) ein Generatorläufer vorgeschlagen, dessen Hochvakuumabdichtung als berührungslose Flüssigkeitsabdichtung ausgebildet ist, deren magnetische Sperrflüssigkeit durch ein Magnetfeld im Dichtungsspalt gehalten ist, wobei die Flüssigkeitsdichtungen an ein mitrotierndes Sperrflüssigkeitsreservoir angeschlossen sind.

Der vorliegenden Erfindung liegt demgegenüber die Aufgabe zugrunde, eine Einrichtung gemäss Gattungsbegriff zu schaffen, die so ausgebildet ist, dass auch mit einem Dehnungskompensator der Aufgabenkomplex a) bis f) gelöst werden kann, wodurch sich die Hochvakuumabdichtung vereinfachen und verbilligen lässt.

Erfindungsgemäss wird die gestellte Aufgabe mit einer Einrichtung gemäss Oberbegriff des Anspruchs 1 durch die im Kennzeichen des Anspruchs 1 angegebenen Merkmale gelöst. Vorteilhafte Weiterbildungen sind in den Unteransprüchen 2 bis 7 angegeben. Die mit der Erfindung erzielbaren Vorteile sind vor allem darin zu sehen, dass nun auch unter Verwendung eines Dehnungskompensators eine Hochvakuumabdichtung geschaffen worden ist, welche allen im Betrieb eines supraleitenden Generators auftretenden Beanspruchungen gewachsen ist und welche sich auch in einer wartungsfreundlichen Anordnung realisieren lässt. Im folgenden wird anhand der Zeichnung, in der ein Ausführungsbeispiel der Erfindung dargestellt ist, diese noch näher erläutert. Darin zeigt in einem Ausschnitt der Wellenanordnung eines supraleitenden Generators:

Fig. 1 einen axialen Teilschnitt der interessierenden Wellenpartien mit dem dazwischen angeordneten Dehnungskompensator;

Fig. 2 den achsnormalen Teilschnitt gemäss Schnittebene II-II aus Fig. 1.

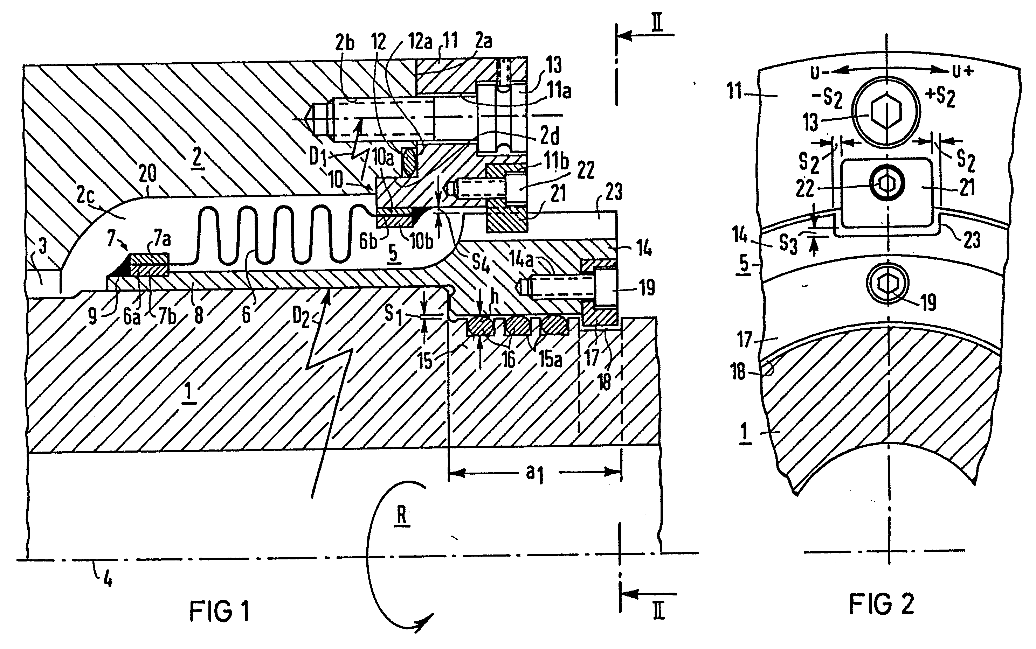

Das im folgenden beschriebene bevorzugte Ausführungsbeispiel geht von einer Hohlwellenanordnung eines supraleitenden Generators aus, wie sie in der DE-OS 2 918 763 (2), siehe Fig. 1 und Fig. 2, beschrieben ist, worauf ausdrücklich zur Vermeidung von Wiederholungen verwiesen wird. Erfindungsgemäss ist aber demgegenüber der Dehnungskompensator andersartig befestigt und mit einer Schutzvorrichtung versehen, wie nachfolgend erläutert.

Fig. 1 zeigt im Ausschnitt den Rotor R eines supraleitenden Turbogenerators mit innerer Hohlwelle 1 und äusserer Hohlwelle 2. Beide Hohlwellen 1 und 2 sind so ausgebildet und angeordnet, dass sie mit Ringspalt 3 voneinander getrennt synchron um die Läuferachse 4 rotieren können. Im Ringspalt 3 herrscht normalerweise ein Unterdruck zum Aussenraum; es kann im Ringspalt 3 jedoch auch ein Überdruck herrschen, so dass der Ringspalt 3 präzise gegen den Aussenraum abgedichtet werden muss. Die Abdichtung besteht aus einem im folgenden vereinfacht als Kompensator bezeichneten Dehnungskompensator 6, dessen linkes Ende 6a zwischen den beiden Lagen 7a, 7b eines Verstärkungsringes 7 gefasst und mittels dieses Verstärkungsringes mit einem Haltering 8 am linken Ende des Aussenumfanges desselben durch Dichtschweissung 9 verbunden ist. Das rechte Kompensatorende 6b ist zwischen den beiden Lagen 10a, 10b des rechten Verstärkungsringes 10 gefasst und mit einen Flanschring 11, und zwar am Innenumfang dieses Flanschringes, verschweisst. Mit einem in die Ringnut 12a der Hohlwellen-Stirnwand 2a eingelegten O-Ring 12 ist der Flanschring 11 abgedichtet. Der Flanschring 11 ist mit der Hohlwelle 2 fest verschraubt, siehe Schraubenbolzen 13, Durchgangsbohrung 11a im Flanschring 11 sowie Gewindebohrung 2b in der Stirnwand 2a der Hohlwelle 2, wobei die Teile bzw. Positionen 2b, 11a, 13 auf einem Lochkreis mit dem Durchmesser D1 verteilt angeordnet sind. Am Hohlwellenabsatz 2d ist der Flanschring 11 mit einem Ringvorsprung zentriert. Der die innere Hohlwelle 1 umschliessende Haltering 8 ist an seinem inneren Durchmesser D2 gleitend auf dem Aussenumfang der inneren Hohlwelle 1 gelagert. An seinem rechten Ende umschliesst der Haltering 8 mit einer radial ein- und auswärts vorspringenden Verdickung 14 den Wellenabsatz 15 mit dem Spaltabstand $S_1$ auf der axialen Länge $a_1$. Am Wellenabsatz 15 ist der Haltering 8 mit O-Ringen 16 gegen die innere Hohlwelle 1 abgedichtet. Die O-Ringe 16 sind in Ringnuten 15a am Aussenumfang des Wellenabsatzes 15 eingelegt; dargestellt sind drei axial aufeinanderfolgende O-Ringe 16 und zugehörige Ringnuten 15a. Die axiale Arretierung des drehbar gelagerten Halteringes 8 erfolgt über mindestens ein Segment 17, das in eine Umfangswelle 18 der Hohlwelle 1 drehbar eingreift. Das Segment 17 ist mittels in Gewindebohrungen 14a eingeschraubter Schrauben 19 mit der Verdickung 14 des Halteringes 8 verbunden. Im Bereich des Kompensators 6 ist die äussere Hohlwelle 2 zur Aufnahme der Dichtung eingedreht. Durch die Eindrehung 20 wird eine mit dem Ringspalt 3 kommunizierende Kompensator-Aufnahmekammer 2c gebildet.

In den Flanschring 11 ist das Mitnehmerelement in Form eines Mitnehmernockens 21 eingepasst und bei 22 verschraubt. Der Mitnehmernocken 21 greift in eine Axialnut 23 am Aussenumfang der Halteringverdichtung 14 ein.

Fig. 2 zeigt einen Schnitt entlang der Ebene II-II der Fig. 1. Zwischen dem Mitnehmernocken 21 und der Axialnut 23 ist in Umfangsrichtung auf beiden Seiten das Tangentialspiel $S_2$ vorgesehen, welches korrespondierend zu den beiden Drehrichtungen ± u entsprechend mit + $S_2$ und – $S_2$ bezeichnet ist. In radialer Richtung ist zwischen den Mitnehmernocken 21 und der Axialnut 23 das rechte Spiel $S_3$ vorgesehen. Die radiale Begrenzung der Relativbewegung zwischen innerem und äusserem Hohlwellenteil 1-2 erfolgt zwischen dem Aussenumfang des Halteringes 8 und dem Innenumfang des Flanschringes 11 durch den radialen Begrenzungsspalt $S_4$, wobei $S_4 < S_3$. Da die Schwingungsebene von radialen Wellenausschlägen nicht nur in der vertikalen Achsebene, sondern auch in demgegenüber verdrehten Achsebenen liegen kann und da für solche Ausschläge $S_4$ der kleinste Radialspalt sein soll, so gilt weiter: $|S_2| > S_4$ und $|S_2| \geq S_3$.

Die praktische Erfahrung lehrt, dass an zwei rotierenden Bauteilen, die sich gegeneinander bewegen, d.h. auch gegeneinander schwingen, Berührungsflächen konstruktiv möglichst vermieden werden sollten. Der Verschleiss solcher Flächen wäre nicht beherrschbar und würde in den meisten Fällen zu einem frühzeitigen Funktionsausfall führen. Die Grössen bzw. Spaltbreiten des tangentialen Spieles $S_2$ und des Begrenzungsspaltes $S_4$ sind zum einen derart bemessen, dass die im Normalbetrieb auftretenden Schwingungsamplituden keine Berührung zwischen dem Flanschring 11 und seinem Mitnehmernocken 21 einerseits und der Verdickung 14 des Halteringes 8 andererseits verursachen können. Zum anderen ist das tangentiale Spiel $S_2$ derart bemessen, dass die volle Nutzung des Spaltes ($S_2$ = Einfachamplitude der Torsionsschwingung) die mechanische Beanspruchung des Kompensators 6 noch zulässt. Die Torsionsmomente des Kompensators 6, die dabei auf den Haltering 8 ausgeübt werden, sind kleiner als das Moment, das zum Verdrehen des Halteringes 8 an der Welle 1 erforderlich wäre. Demnach werden im Normalbetrieb die Berührung des Mitnehmernockens 21 an den Flanken der Axialnut 23 und das Gleiten des Halteringes 8 auf den Dichtringen 16 vermieden.

Im Sonderfall, der relativ selten und nur kurzzeitig auftritt, muss mit einer Verdrehung von mehreren Grad in beiden Drehrichtungen + u und – u gerechnet werden. Die Verdrehung würde ohne die vorgeschlagene Massnahme den Kompensator 6 sofort zerstören, erfindungsgemäss hingegen kommt im erwähnten Sonderfall der Mitnehmernocken 21 zur Anlage an den Flanken der Axialnut 23 und nimmt bei Überschreitung des Spiels ± $S_2$ den Haltering 8 mit der Kompensator-Einspannung 6a, 7 mit. Der Kompensator 6 erfährt dabei eine max. Verdrehung entsprechend dem Spiel ± $S_2$, die bereits bei seiner Auslegung berücksichtigt wurde. Da dieser Extremfall nur selten und dann nur kurzzeitig auftritt, ist auch die Flankenberührung des Mitnehmernockens 21 an der Nutflanke der Axialnut 23 des Halteringes 8 vertretbar.

Die Dichtringe 16 zwischen der inneren Hohlwelle 1 und dem Haltering 8 sind hinsichtlich der Werkstoffwahl und der Schnurverformung h derart ausgelegt, dass eine kurzzeitige, ruckweise, wechselseitige Gleitbewegung ohne Verschlechterung der Dichtfunktion ermöglicht ist. Hierzu ist es vorteilhaft, wenn die zwischen der inneren Hohlwelle 1 und dem Haltering 8 angeordneten Dichtungsringe 16 und ihre metallischen Gegendichtflächen an der inneren Hohlwelle 1 sowie dem Haltering 8 mit einem Gleitmittel beschichtet sind, wozu sich z.B. PTFE (Polytetrafluoräthylen) eignet.

Die Auskammerung 11b, in welche der Mitnehmernocken 21 eingesetzt ist, kann über den Umfang des Flanschringes 11 verteilt an mehreren Umfangsstellen vorgesehen sein, vorzugsweise unter gleichmässiger Verteilung, so dass sich die bei relativen Wellenausschlägen an den Mitnehmernocken 21 angreifenden Kräfte über den Umfang des Flanschringes 11 verteilen und dementsprechend auch über den Umfang des Halteringes 8, welcher in diesem Falle mit mehreren über seinen Umfang verteilten Axialnuten 23 zu versehen wäre.

Eine Inspektion und Wartung des Kompensators 6 ist auf einfache Weise möglich, weil nach Lösen der Schraubenbolzen und Entfernen der Segmente 17 und nach Lösen der Befestigungsbolzen 13 sowohl der Haltering 8 als auch der Flanschring 11 gemeinsam mit dem Kompensator 6 axial nach aussen abgezogen werden können in eine Position, in welcher der Kompensator 6 inspiziert und notfalls ausgewechselt werden kann.

Die Erfindung ist auf den Anwendungsfall bei Rotoren supraleitender Generatoren nicht beschränkt; sie ist mit Erfolg überall da anwendbar, wo eine wärmebewegliche und abdichtende Kopplung zweier mit Ringspalt konzentrisch zueinander angeordneter, normalerweise synchron umlaufender Wellenteile herbeigeführt werden soll. Ein solcher Fall könnte z.B. auch gegeben sein bei einer Rotoranordnung für Einphasenwechselstrom-Generatoren oder zugehörigen Dampfturbinenläufern, bei denen eine zentrale Längsbohrung des Rotors von einer Torsionswelle durchdrungen wird, die an ihrem einen Ende mit dem hohlen Rotor und an ihrem anderen Ende mit einer antreibenden Welle bzw. einem gelagerten Wellenzapfen verbunden ist.

## Patentansprüche

1. Einrichtung an einer rotierenden Maschine zur wärmebeweglichen und abdichtenden Kopplung zweier mit Ringspalt konzentrisch zueinander angeordneter, normalerweise synchron umlaufender Wellen, von denen zumindest die äussere Welle eine Hohlwelle (2) ist, wobei ein Zwischenraum zwischen innerer (1) und äusserer Welle mittels eines Dehnungskompensators (6) abgedichtet ist, welcher zwischen dem Innenumfang der äusseren und dem Aussenumfang der inneren Welle angeordnet und dichtend befestigt ist und Relativbewegungen zwischen den beiden Wellen in axialer, radialer und tangentialer Richtung zulässt, dadurch gekennzeichnet, dass die innere Welle (1) an das eine Ende des Dehnungskompensators (6) über einen an der inneren Welle (1) drehbar und dichtend gelagerten Haltering (8) angeschlossen ist und dass die Hohlwelle (2) mit wenigstens einem Mitnehmernocken (21) in den Haltering (8) mit einem Tangentialspiel ($S_2$) eingreift, welches kleiner als die maximal zulässige Verwindung des Dehnungskompensators (6) ist, so dass bei grösseren, das Tangentialspiel ($S_2$) überschreitenden Verwindungen der inneren Welle (1) und Hohlwelle (2) gegeneinander Haltering (8) und Dehnungskompensator (6) über das Mitnehmerelement (21) mit der Hohlwelle (2) mechanisch verbunden sind.

2. Einrichtung nach Anspruch 1, dadurch gekennzeichnet, dass im Normalbetrieb das Tangentialspiel (± $S_2$) in Uhr- und in Gegenuhrzeigerrichtung (± u) gleich gross ist.

3. Einrichtung nach Anspruch 1 oder 2, dadurch gekennzeichnet, dass die zwischen der inneren Welle (1) und dem Haltering (8) angeordneten Dichtungsringe (16) und ihre metallischen Gegendichtflächen an der inneren Welle (1) und dem Haltering (8) mit Gleitmittel, z.B. PTFE (Polytetrafluoräthylen) beschichtet sind.

4. Einrichtung nach einem der Ansprüche 1 bis 3, dadurch gekennzeichnet, dass das Mitnehmerelement (21) als Mitnehmernocken ausgebildet ist und in eine Axialnut (23) am Aussenumfang des Halteringes (8) mit Radialspiel ($S_3$) zum Nutengrund eintaucht, welches grösser ist als das Radialspiel ($S_4$) zwischen dem Aussenumfang des Halteringes (8) und dem inneren Umfang einer den Mitnehmernocken (21) halternden Wellenpartie der Hohlwelle (2), wobei jedoch die Spaltbreite des Ringspaltes ($S_4$) der die radiale Bewegung der inneren Welle (1) begrenzenden Wellenpartie (11) grösser ist als die maximal im Betrieb auftretende radiale Schwingungsamplitude der inneren Welle (1), wobei ferner gilt: $|S_2| > S_4$ und $|S_2| \geq S_3$.

5. Einrichtung nach Anspruch 4, dadurch gekennzeichnet, dass die Wellenpartie (11) von einem Flanschring gebildet ist, der gegen eine Stirnfläche (2a) der Hohlwelle (2) mittels Schraubenbolzen (13) dichtend verspannt und dabei an einem Hohlwellenabsatz (2d) zentriert ist, wobei der Innenumfang des Flanschringes als Befestigungsfläche für das äussere Ende des Dehnungskompensators (6) dient.

6. Einrichtung nach Anspruch 5, dadurch gekennzeichnet, dass das axial äussere Ende des Flanschringes (11) mindestens eine Auskammerung (11b) aufweist, in welche der Mitnehmernocken (21) eingesetzt und darin befestigt ist.

7. Einrichtung nach Anspruch 6, dadurch gekennzeichnet, dass mindestens zwei gleichmässig über den Innenumfang des Flanschringes (11) bzw. der Hohlwelle (2) verteilte Auskammerungen (11b) und zugehörige Mitnehmernocken (21) vorgesehen sind.

## Claims

1. An arrangement on a rotating machine providing a thermally mobile and sealing coupling between two shafts which are arranged concentrically to one another with an annular gap between them and which normally rotate in synchronism, at least the outer shaft being a hollow shaft (2), where the interspace between the inner shaft (1) and the outer shaft is sealed by means of an expansion compensating means (6) arranged between the inner periphery of the outer shaft and the outer periphery of the inner shaft and is secured in sealed manner, and which permits relative movements between the two shafts in the axial, radial and tangential directions, characterised in that the inner shaft (1) is connected to one end of the expansion compensating means (6) through a retaining ring (8) which is rotatably mounted on the inner shaft (1) in sealed fashion; and that by means of at least one key (21), the hollow shaft (2) engages into the retaining ring (8) with a degree of tangential play ($S_2$) which is less than the maximum permissible torsion of the expansion compensating means (6), so that in the event of a twisting of the inner shaft (1) and the hollow shaft (2) relative to one another which exceeds the tangential play ($S_2$), the retaining ring (8) and the expansion compensating means (6) are mechanically connected to the hollow shaft (2) through the key element (21).

2. An arrangement as claimed in claim 1, characterised in that in normal operation the tangential play ($\pm S_2$) is the same in both the clock-wise and the anti-clock-wise direction ($\pm u$).

3. An arrangement as claimed in claim 1 or claim 2, characterised in that the sealing ring (16), arranged between the inner shaft (1) and the retaining ring (8), and the metal counter-sealing surfaces on the inner shaft (1) and the retaining ring (8), are coated with a lubricant, e.g. PTFE (polytetrafluoroethylene).

4. An arrangement as claimed in claims 1 to 3, characterised in that the key element (21) is in the form of a keying stud and engages in an axial groove (23) at the outer periphery of the retaining ring (8) with a degree of radial play ($S_3$) relative to the base of the groove which is greater than the radial play ($S_4$) between the outer periphery of the retaining ring (8) and the inner periphery of a part of the hollow shaft (2) which supports the keying stud (21), where, however, the width of the annular gap ($S_4$) of that part (11) of the shaft which delimits the radial movement of the inner shaft (1) is greater than the maximum radial amplitude of vibration of the inner shaft which occurs during operation, and where: $|S_2| > S_4$ and $|S_2| \geq S_3$.

5. An arrangement as claimed in claim 4, characterised in that the shaft part (11) is formed by a flange ring which is secured in sealed fashion against an end face (2a) of the hollow shaft (2) by means of threaded bolts (23), and is thereby centred at a projection (2d) of the hollow shaft, the inner periphery of the flange ring serves as a securing surface of the outer end of the expansion compensating means (6).

6. An arrangement as claimed in claim 5, characterised in that the axial outer end of the flange ring (11) contains at least one opening (11b) into which the keying stud (21) is inserted and secured.

7. An arrangement as claimed in claim 6, characterised in that at least two openings (11b), uniformly distributed over the periphery of the flange ring (11) and the hollow shaft (2), and associated keying studs (21), are provided.

## Revendications

1. Dispositif monté sur une machine tournante pour réaliser l'accouplement, mobile sous l'effet de la chaleur et étanche, entre deux arbres concentriques l'un à l'autre en étant séparés par une fente annulaire et tournant normalement de façon synchrone et parmi lesquels au moins l'arbre extérieur est un arbre creux (2), auquel cas un espace intercalaire entre l'arbre intérieur (1) et l'arbre extérieur est étanchéifié au moyen d'un compensateur de dilatation (6) qui est disposé entre le pourtour intéreur de l'arbre extérieur et le pourtour extérieur de l'arbre intérieur et est fixé d'une manière étanche et permet des déplacements relatifs entre les deux arbres dans les directions axiale, radiale et tangentielle, caractérisé par le fait que l'arbre intérieur (1) est raccordé à une extrémité du compensateur de dilatation (6), par l'intermédiaire d'une bague de retenue (8) montée de manière étanche et de façon pouvoir tourner sur l'arbre intérieur (1), et que l'arbre creux (2) s'engage par au moins un organe d'entraînement (21) dans l'anneau de support (8) en laissant subsister un jeu tangentiel ($S_2$), qui est inférieur à une torsion maximale admissible du compensateur de dilatation (6), de sorte que dans le cas de rotations assez importantes, dépassant le jeu tangentiel ($S_2$), entre l'arbre intérieur (1) et l'arbre creux (2), l'anneau de support (8) et le compensateur de dilatation (6) sont reliés mécaniquement par l'intermédiaire de l'organe d'entraînement (21) à l'arbre creux (2).

2. Dispositif suivant la revendication 1, caractérisé par le fait que pendant le fonctionnement normal, le jeu tangentiel ($\pm S_2$) est identique dans le sens des aiguilles d'une montre et en sens inverse des aiguilles d'une montre ($\pm u$).

3. Dispositif suivant la revendication 1 ou 2, caractérisé par le fait que les bagues d'étanchéité (16), qui sont disposées entre l'arbre intérieur (1) et l'anneau de retenue (8), et les surfaces métalliques d'étanchéité antagonistes, qui sont situées sur l'arbre intérieur (1) et sur la bague de retenue (8), sont recouverts d'une substance permettant un glissement, par exemple du PTFE (polytétrafluoroéthylène).

4. Dispositif suivant l'une des revendications 1 à 3, caractérisé par le fait que l'organe d'entraînement (21) est réalisé sous la forme d'une came d'entraînement et pénètre dans une rainure axiale (23) ménagée dans le pourtour extérieur de l'anneau de retenue (8) en laissant subsister par rapport au fond de la rainure un jeu radial ($S_3$) qui est supérieur au jeu radial ($S_4$) existant entre le pourtour extérieur de l'anneau de retenue (8) et le pourtour intérieur d'une partie de l'arbre creux (2) qui maintient la came d'entraînement (21), la largeur de la fente annulaire ($S_4$ de la partie (11) de l'arbre, qui limite le déplacement radial de l'arbre intérieur (1), étant cependant supérieure à l'amplitude vibratoire radiale, apparaissant lors du fonctionnement, de l'arbre intérieur (1), auquel cas on a en outre:
$$|S_2| > S_4 \text{ et } |S_2| \geq S_3.$$

5. Dispositif suivant la revendication 4, caractérisé par le fait que la partie (11) de l'arbre est formée par un collet qui est serré de façon étanche contre une surface frontale (2a) de l'arbre creux (2) au moyen de boulons (13) et est centrée sur une partie étagée (2d) de l'arbre creux, le pourtour intérieur du collet servant de surface de fixation pour l'extrémité extérieure du compensateur de dilatation (6).

6. Dispositif suivant la revendication 5, caractérisé par le fait que l'extrémité axiale extérieure du collet (11) possède au moins un évidement (11b) dans lequel la came d'entraînement (21) est insérée et est fixée.

7. Dispositif suivant la revendication 6, caractérisé par le fait qu'il est prévu au moins deux évidements (11b), répartis uniformément sur le pourtour intérieur du collet (11) ou de l'arbre creux (2), et des cames d'entraînement (21) associées.

FIG 1

FIG 2